Europäisches Patentamt

European Patent Office

Office européen des brevets

(11) Veröffentlichungsnummer: **0 049 680**
**A1**

(12) **EUROPÄISCHE PATENTANMELDUNG**

(21) Anmeldenummer: 81730101.3

(22) Anmeldetag: 25.09.81

(51) Int. Cl.³: **B 60 N 1/12**
**A 47 D 1/00**

(30) Priorität: 01.10.80 DE 3037554
05.02.81 DE 8103342 U
21.09.81 DE 3137917

(43) Veröffentlichungstag der Anmeldung:
14.04.82 Patentblatt 82/15

(84) Benannte Vertragsstaaten:
AT BE CH FR GB LI LU NL SE

(71) Anmelder: Adomeit, Heinz-Dieter, Dr.-Ing
Grolmanstrasse 16
D-1000 Berlin 12(DE)

(72) Erfinder: Adomeit, Heinz-Dieter, Dr.-Ing
Grolmanstrasse 16
D-1000 Berlin 12(DE)

(74) Vertreter: Werner, Lothar, Dipl.-Ing
Bolivarallee 9
D-1000 Berlin 19(DE)

(54) Kindersitz für Personenkraftfahrzeuge.

(57) Die Erfindung bezieht sich auf einen Kindersitz (10) für
ein Personenkraftfahrzeug, der aus einer biegesteifen Sitzschale (40) mit vorgezogenen Seitenabschnitten (13) besteht,
bei dem unter einem längsverstellbaren Polsterelement (18)
ein energieabsorbierendes Material (17) angeordnet ist und
der einen verstellbaren Bodenabschnitt (62) hat, um den
Winkel des Bodenabschnittes mit dem Rückenabschnitt für
eine wahlweise Aufstellung des Kindersitzes (10) in Fahrtrichtung oder entgegen der Fahrtrichtung an den Winkel des
Fahrzeugsitzes mit seiner Rückenlehne anpassen zu können,
wobei der Kindersitz durch den Fahrzeugsitzgurt (22) in einer
Haltevorrichtung gehalten wird und das energieabsorbierende Material (17) mit einer Vertiefung (80) sowie das Polsterelement (18) mit einer Verdickung (81) versehen sind, so daß
der Sitz dem Kind je nach Einstellung des Polsterelementes
eine Liegeoder Sitzfläche bietet.

Fig. 4

0049680

# DIPL.-ING. LOTHAR WERNER

## PATENTANWALT

BOLIVARALLEE 9
D-1000 BERLIN 19
TEL.(030) 304 60 83

Dr.-Ing. Heinz-Dieter Adomeit

Grolmanstraße 16

1000 Berlin 12

Mein Zeichen: A 132-EP

Kindersitz für Personenkraftfahrzeuge

Die Erfindung bezieht sich auf einen Kindersitz für Personenkraftfahrzeuge mit einer Sitzfläche, einer Rückenstüze, einer Haltevorrichtung zum Anschluß an den normalen Fahrzeug-Automatiksitzgurt und mit gesonderten, dem Sitz zugeordneten Rückhaltegurten.

Derartige Kindersitze für Personenkraftfahrzeuge sind meist zur Anordnung auf den Rücksitzen in Fahrtrichtung in dem Fahrzeug bestimmt. Die Befestigung des Kindersitzes erfolgt einmal durch den auf dem Rücksitz angeordneten Sitzgurt, der an die dem Kindersitz zugeordnete Haltevorrichtung angeschlossen wird. Weiterhin besitzen die bekannten Kindersitze noch Befestigungsgurte an ihrem oberen Ende. Diese Befestigungsgurte müssen mit Gurtankerpunkten im Bereich der Hutablage hinter den Rücksitzen verbunden werden. Dadurch ist der Kindersitz an der Oberseite der hinteren Rückenlehne aufgehängt, gegen die er mit seiner Rückseite anliegt. Eine derartige Befestigung des Kindersitzes auf dem Rücksitz ist kompliziert. Außerdem kann der Kindersitz nur in dem Fahrzeug sicher be-

We/na

BERLINER DISCONTO BANK 586/06 4/01

festigt werden, das für die Aufnahme des Kindersitzes die Befestigungsmittel im oberen Bereich des Fahrzeugsitzes hat, die in der Regel nicht serienmäßig vorhanden sind. Diese bekannten Kindersitze werden auf den Rücksitzen in Fahrtrichtung verwendet. Dies hat verschiedene Nachteile. Bei einem Frontalaufprall des Fahrzeuges muß der empfindliche Körper des Kindes durch die dem Kindersitz zugeordneten Rückhaltegurte gehalten werden. Hier besteht die Gefahr der Verletzung des empfindlichen Kinderkörpers durch starke Relativbewegungen einzelner Körperabschnitte in dem Kindersitz. Ein weiterer Nachteil besteht darin, daß zur sicheren Halterung des Kindes dieses immer sorgfältig auf dem Kindersitz angeschnallt sein muß. Wenn sich in dem Fahrzeug außer dem Kind nur noch der Fahrer bzw. die Fahrerin befindet, hat dieser bzw. diese keine Kontrolle darüber, ob das Kind immer richtig angeschnallt ist oder ob das Kind die Anschnallgurte gelöst oder gelockert hat. Der Fahrer bzw. die Fahrerin wird in der Aufmerksamkeit für das Führen des Fahrzeuges abgelenkt, da er bzw. sie es nicht dauernd in Sichtkontrolle haben kann. Ein weiterer Nachteil bei den bekannten Kindersitzen ist darin zu sehen, daß bei nicht sorgfältiger Anbringung der Gurte an dem Kindersitz und dem Fahrzeug sowohl in dem unteren Bereich des Kindersitzes als auch in seinem oberen Bereich bei einem Frontalaufprall sich der Kindersitz aus seiner Verankerung lösen kann.

Der Erfindung liegt die Aufgabe zu Grunde, einen Kindersitz für Personenfahrzeuge zu schaffen, der dem Kind bei einem Unfall eine größere Sicherheit bietet und der universell in jedem Fahrzeug ohne Umbau und gesonderte Montage wahlweise auf dem Vordersitz oder auf dem Rücksitz und wahlweise in Fahrtrichtung oder entgegen der Fahrtrichtung angeordnet werden kann und in dem das Kind auch über längere Fahrtstrecken ermüdungsfrei sitzen
kann.

Erfindungsgemäß ist die Lösung dieser Aufgabe gekennzeichnet durch eine biegesteife Sitzschale mit vorgezogenen Seitenabschnitten im Kopf-, Lenden- und Fußbereich, durch einen sich verjüngenden Fußabschnitt,
durch Stoßenergie absorbierende Elemente auf der Innenseite der Sitzschale im Kopf-, Rücken- und Beckenbereich, durch ein in Längsrichtung einstellbares Polsterelement mit ausgearbeiteten Sitzelementenabschnitten,
durch einen verstellbaren Bodenabschnitt zur Anpassung
an die Neigung des Fahrzeugsitzes, auf dem der Kindersitz wahlweise in die oder entgegen der Fahrtrichtung
aufstellbar ist, und durch Haltevorrichtungen zur Aufnahme des Gurtbandes des Fahrzeuggurtes zur Halterung
des Kindersitzes auf dem Fahrzeugsitz.

Durch die Erfindung ist es bei einfacher Handhabung des
Kindersitzes möglich, ein Kleinkind optimal gegen Schäden bei einem Unfall des Fahrzeuges zu schützen. Die wahlweise Anordnung des Kindersitzes auf dem Vordersitz oder
auf dem Rücksitz wahlweise in der Fahrtrichtung oder entgegen der Fahrtrichtung ermöglicht es, daß dieser Kindersitz sofort in jedem Fahrzeug verwendet werden kann, ohne
daß an dem Fahrzeug Änderungen zur Befestigung des Kindersitzes vorgenommen werden müssen oder daß der Kindersitz
vor Fahrtantritt erst umständlich montiert werden muß.
Bei einer Anordnung des Kindersitzes auf dem Vordersitz,
beispielsweise entgegen der Fahrtrichtung, hat der Fahrer
oder die Fahrerin das Kind neben sich immer im Blickfeld,
und zwar sitzt das Kind ihm bzw. ihr seitlich gegenüber,
so daß er bzw. sie sich wesentlich besser auf den Verkehr und das Führen des Fahrzeuges konzentrieren kann.
Durch die vorgezogenen Seitenabschnitte der Sitzschale
ist der Greifbereich des Kindes, ohne dieses zu behindern, so eingeengt, daß eine Behinderung des Fahrers oder
der Fahrerin durch die Hände des Kindes ausgeschlossen
ist. Die vorgezogenen Seitenabschnitte im Kopf- und Lendenbereich bieten dem Kind in dem Kindersitz zusätzlichen Schutz. Gleichzeitig wird aber auch durch die
vorgezogenen Seitenabschnitte die Biegefestigkeit der
Sitzschale so erhöht, daß diese im Fall eines Frontalaufpralls unter dem Gewicht des Kindes nicht bzw. nur in dem
zulässigen und gewünschten Maß nachgibt. Im Fall eines
Frontalaufpralles des Fahrzeuges lehnt sich die Sitzschalenrückseite fest gegen das Armaturenbrett an und
wird an diesem abgestützt. Im Fall eines Heckstosses bei
entgegen der Fahrtrichtung auf dem Sitz angeordneten
Kindersitz wird sich der mit der Sitzschalenrückseite
gegen das Armaturenbrett aufliegende Kindersitz nach
rückwärts zu der Rückenlehne des Fahrzeugsitzes hin bewegen und der Stoß wird von den vorgezogenen Seitenabschnitten im Kopfbereich aufgefangen, die sich gegen die
Rückenlehne des vorderen Fahrzeugsitzes abstützen, ohne
dabei den Kopf des Kindes einzuklemmen. Das gleiche erfolgt auch bei einer Aufstellung des Kindersitzes entgegen der Fahrtrichtung auf dem hinteren Sitz. In der Aufstellung entgegen der Fahrtrichtung auf dem hinteren Fahrzeugsitz stützt sich dann die Rückseite des Rückenabschnitts des Kindersitzes gegen die Rückseite der vorderen
Sitzlehne des Fahrzeugsitzes ab. Der verstellbare Bodenabschnitt des Kindersitzes ermöglicht es, den Winkel der
Bodenfläche zu dem Rückenabschnitt des Kindersitzes so
einzustellen, daß dieser Winkel dem Winkel angepaßt ist,
den die Sitzfläche des Fahrzeugsitzes zu seiner Rückenlehne hat, damit der Sitz einmal in Fahrtrichtung angeordnet werden kann und nach einer Veränderung der Winkelverhältnisses durch eine Verstellung des Bodenabschnittes auch entgegen der Fahrtrichtung aufgestellt werden kann. Die Anpassung des Winkels der Bodenfläche zu dem Rückenabschnitt stellt sicher, daß der Sitz dem Kind eine ermüdungsfreie Sitzposition bietet. Die Verwendung des in Längsrichtung einstellbaren Polsterelementes mit ausgearbeitetem Sitzelementenabschnitt ermöglicht es, den Kindersitz auf die Körpergröße des Kindes oder auch eines Säuglings einzustellen, so daß das Kind in der richtigen, sicheren Sitzposition bzw. in einer dem Liegen nahekommenden Position gehalten wird. Diese günstigste und sicherste Sitzposition kann dabei durch den verstellbaren Bodenabschnitt des Kindersitzes in beiden Aufstellungsarten wiederum eingerichtet werden. Von besonderem Vorteil ist es, daß der Kindersitz ohne die Verwendung irgendwelcher Werkzeuge und ohne zusätzliche Arbeiten leicht in dem Fahrzeug auf jedem Sitz in in jeder Stellung zur Fahrtrichtung aufgestellt werden kann. Der Kindersitz ist in jeder Sitzposition durch das Gurtband des Fahrzeuggurtes sicher gehalten, der in der Haltevorrichtung des Kindersitzes angebracht wird.

Vorteilhafte Ausgestaltungen des erfindungsgemäßen Kindersitzes ergeben sich aus den Unteransprüchen. Der verstellbare Bodenabschnitt des Kindersitzes kann als verstellbarer Keil ausgebildet sein, der symmetrisch oder asymmetrisch ausgeführt ist und wahlweise mit dem Sitzschalenboden gelenkig verbunden ist oder in entsprechende Aufnahmevorrichtungen einsteckbar ist. Der verstellbare Bodenabschnitt kann auch als mittig angelenktes Pendel ausgebildet sein. Eine weitere Ausführungsform des verstellbaren Bodenabschnittes ist die Ausbildung als schwenkbar an der Sitzschale angelenkter Sitzboden, dessen Gelenkpunkt am Übergang in den Rückenabschnitt angeordnet ist.
Ebenfalls eine Ausgestaltung des verstellbaren Bodenabschnittes ist eine Ausbildung als schwenkbarer Fußabschnitt, der in der Mitte des Schalenbodens angelenkt
ist. Diese verschiedenen Ausführungsformen ermöglichen
verschiedene Ausbildungen zur Anpassung des Winkels zwischen dem Bodenabschnitt und dem Rückenabschnitt der Sitzschale an den Winkel der Fahrzeugsitzfläche zu der zugeordneten Rückenlehne. Ebenfalls eine vorteilhafte Ausgestaltung des erfindungsgemäßen Kindersitzes besteht darin, daß das vordere Ende des Fußabschnittes als flach
sich verjüngender Vorsprung ausgebildet ist, der bei
einer Anordnung des Kindersitzes entgegen der Fahrtrichtung zur Kippsicherung zwischen dem unteren Lehnenende
und dem hinteren Sitzende des Fahrzeugsitzes einklemmbar
ist. Hier wird auf einfache Weise eine sichere Festlegung und Halterung des Kindersitzes bei dieser Aufstellungsform erreicht, denn in jedem Fahrzeug befindet sich
ein Spalt zwischen der Rückenlehne und der Fahrzeuzitzfläche, in der dieser sich flach verjüngende Vorsprung
eingesteckt werden kann. Diese Ausführungsform nimmt
auch sicher die Kippbelastung auf, die bei einer schnellen
Kurvenfahrt des Fahrzeuges auf den Kindersitz einwirkt.
Ebenfalls eine vorteilhafte Ausgestaltung des erfindungsgemäßen Kindersitzes besteht darin, daß die Haltevorrichtung zur Aufnahme des Gurtbandes des Fahrzeuggurtes als
die unteren Seitenteile der Sitzschale durchdringende
Schlitze ausgebildet ist, die eine Anordnung des Beckengurtes eines Dreipunkt-Fahrzeuggurtes auf dem Fußabschnitt
des Kindersitzes ermöglichen. Diese Ausgestaltung der
Haltevorrichtung ermöglicht es in vorteilhafter Weise,
bei einer ausreichend ausgezogenen Gurtlänge des Beckengurtes diesen ohne daß das Kind in dem Kindersitz behindert wird in dem Fußabschnitt so anzuordnen, daß eine sichere Halterung in jeder Aufstellungsart auf jedem Fahrzeugsitz, der einen Dreipunkt-Fahrzeuggurt besitzt, ermöglicht wird. Bei einer Aufstellung entgegen der Fahrtrichtung gewährleistet diese Ausführungsform der Haltevorrichtung in Verbindung mit dem sich flach verjüngenden Vorsprung des Fußabschnittes, der in dem Spalt zwischen dem Lehnenende und dem Sitzende des Fahrzeugsitzes eingeklemmt ist, ein absolut kippsicheres Aufstellen , bei dem auch bei einem Heckaufprall bei einer Aufstellung des Kindersitzes entgegen der Fahrtrichtung ein Herumkippen des Kindersitzes in Richtung der Rückenlehne des Fahrzeugsitzes nicht zu befürchten ist. Ebenfalls eine Ausgestaltung der Erfindung besteht darin, daß die Haltevorrichtung zur Aufnahme des Gurtbandes des Fahrzeuggurtes als die oberen Seitenteile durchdringende Schlitze ausgebildet ist, die eine Anordnung des Schultergurtes eines Dreipunkt-Fahrzeuggurtes in dem Rückenabschnitt des Kindersitzes ermöglichen. Diese Ausführungsform dient zur Halterung des Kindersitzes bei einer Aufstellung auf dem Fahrzeugsitz in Fahrtrichtung. Die Schlitze sind in beiden Seitenteilen ausgebildet, damit der Kindersitz wahlweise auf der linken Seite oder auf der rechten Fahrzeugseite aufgestellt werden kann. Der Schultergurt des Dreipunkt-Fahrzeuggurtes behindert das Kind nicht, da das Gurtband dicht auf der Rückenfläche des Kindersitzes aufliegt. Ebenfalls eine Ausgestaltung der letztgenannten Ausführungsform des Kindersitzes besteht darin, daß die Schlitze in den oberen Seitenteilen zur Erhöhurg eines Reibungseingriffes bei einer Zugbelastung S-förmig ausgebildet sind. Hierdurch wird erreicht, daß bereits bei einem relativ geringen Stoß gegen das Fahrzeug der in Fahrtrichtung aufgestellte Kindersitz durch den Schultergurt sicher gehalten wird. Durch die Ausbildung der Innenseiten der Seitenabschnitte als Armlehne verbleibt dem
Kind ausreichende Bewegungsfreiheit für die Arme und
Hände, ohne daß dadurch der Fahrer oder die Fahrerin
belästigt wird, wenn sich der Kindersitz auf dem Vordersitz entgegen der Fahrtrichtung aufgestellt befindet. Da
die Seitenabschnitte im Kopfbereich über das Kopfprofil
hinausragen, wird der Kopf auch bei einem Aufprall gegen
die gegenüberliegende Sitzlehne im Fall eines Heckaufpralls geschützt, da der Kindersitz immer durch die Seitenabschnitte aufgefangen wird. In dem Fußabschnitt dienen
die über das Fußprofil hinausreichenden Seitenabschnitte
ebenfalls dem Schutz des Kindes. Durch diese Ausführungsform des Kindersitzes mit den vorgezogenen Seitenabschnitten ist das Kind auch bei einem Kippen des Kindersitzes
zur Seite geschützt, da die Seitenabschnitte ausreichend
den Körper des Kindes überdecken, der in dem Kindersitz
durch den Kindersitzgurt gehalten ist. Die verstellbare
Anordnung des Sitzelementenabschnittes in der Sitzschale
erleichtert das Anpassen der Sitzgeometrie an die Größe
des Kinderkörpers. Außerdem besteht die Möglichkeit, einem
kleineren Kind eine Auflagefläche in der Sitzschale zu bieten, die einer Liegeposition nahekommt. Dadurch wird auch
in vorteilhafter Weise erreicht, daß Kleinkinder auch
über längere Strecken bequem transportiert werden können,
wobei die Kinder bequem schlafen können. Die Ausbildung
einer Nut-Keilverbindung auf der Unterseite des Sitzelementenabschnittes und der zugeordneten Oberseite der Sitzschale erleichtern das Einstellen des Polsterelementes in
der Länge. Gleichzeitig ist ein Verrutschen auf einfache
Weise vermieden. Die Ausbildung der Sitzschale aus einer
einstückig ausgebildeten Außenschale aus hochfestem Kunststoff, in der eine einstückige Einlageschale aus Styropor
befestigt ist, verleiht der Sitzschale die gewünschte

Festigkeit bei gleichzeitig geringstmöglichem Gewicht,
wobei diese Ausführungsform mit wirtschaftlich vertretbaren Kosten herstellbar ist. Dadurch, daß alle Verankerungselemente zur Befestigung von Gurtelementen des
Kindersitzgurtes in der Sitzschale selbst eingelassen befestigt sind, sind vorstehende Elemente vermieden und es
wird die Festigkeit des Kindersitzes erhöht. Gleichzeitig ist vermieden, daß bei einer Zugbelastung der Kindersitzgurte die Befestigungselemente aus ihrer Verankerung herausgerissen werden. Eine weitere vorteilhafte
Ausgestaltung des erfindungsgemäßen Kindersitzes besteht
darin, daß die Rückenlehne im Mittelbereich eine Vertiefung hat, daß das lose und längsverstellbare Polsterelement in der Sitzposition im Bereich der Vertiefung eine
zum Ausgleich der Vertiefung dienende Verdickung besitzt
und daß der Sitzschalenabschnitt, der in der Sitzposition
zur Unterstützung der Oberschenkel und des Gesäß-Beckenbereiches dient, als verstellbarer, keilförmiger Sitzelementenabschnitt ausgebildet ist. Hierdurch ist ein Kindersitz geschaffen, bei dem nur der keilförmige Sitzelementenabschnitt auf der Auflagefläche in dem Fußabschnitt
herumgedreht und auf der gleichen Auflagefläche sowie das
Polsterelement soweit nach unten verlagert werden muß,
bis die Verdickung an der Verbindungsstelle zwischen
der Rückenlehne und dem waagerechten Fußabschnitt der Sitzschale angeordnet ist. In dieser Stellung des Polsterelementes wird die Vertiefung in der Fläche der Rückenlehne
von einem Polsterabschnitt mit nur normaler Wandstärke
bedeckt, so daß dieser Bereich in der Liegeposition des
Kindes eine nach hinten verlagerte Auflagefläche für den
Kopf bietet. Da der Rücken des Kindes gleichzeitig durch
die Verdickung des Polsterelementes angehoben wird, ergibt sich zusammen mit der veränderten Sitzgeometrie im

Kniebereich eine Fläche, die eine relativ gestreckte
Lage des Kinderkörper ermöglicht. Diese Liegeposition
des Kindes in dem Kindersitz wird dabei erreicht, ohne
daß die Außenabmessungen des Kindersitzes verändert
werden. Das bedeutet, daß der Kindersitz in seiner verankerten Lage innerhalb des Fahrzeuges verbleiben kann.
Ein im Beckenbereich des Kindes angeordneter Sicherheitsgurt dient auch weiterhin zum Halten des Kindes in
liegender Position. Durch die Verlagerung des keilförmigen Sitzelementenabschnittes in dem Sitz-Fußbereich
ist auch in der liegenden Position des Kindes sichergestellt, daß das Kind bei einem Aufprall zusammen mit dem
Sicherheitsgurt festgehalten wird. Ebenfalls eine vorteilhafte Ausgestaltung besteht darin, daß der keilförmige
Sitzelementenabschnitt in Rastpositionen verstellbar ist.
Für ein leichtes Anschmiegen des Polsterelementes an die
Kontur ist es von Vorteil, daß das Polsterelement der
Verdickung nach oben benachbart quersegmentierte Polsterabschnitte hat.

Im nachfolgenden sind Ausführungsbeispiele der Erfindung
beschrieben, die in der Zeichnung dargestellt sind. In
der Zeichnung sind:

Fig.1    eine perspektivische Darstellung einer Ausführungsform des Kindersitzes, der auf einem
         Vordersitz des Fahrzeuges entgegen der Fahrtrichtung aufgestellt ist und sich mit seiner
         Rückseite gegen das angedeutete Armaturenbrett
         eines Personenkraftwagens anlehnt,

Fig.2    ein Längsschnitt durch ein Ausführungsbeispiel
         eines Kindersitzes,

Fig.3    eine Seitenansicht einer Ausführungsform eines
         Kindersitzes mit einem als vollsymmetrischen
         Ausgleichskeil unter dem Sitz angelenkten ver-
         stellbaren  Bodenabschnitt,

Fig.4    eine Seitenansicht einer weiteren Ausführungsform eines Kindersitzes, bei dem der verstellbare Bodenabschnitt als nicht symmetrischer, umsteckbarer Ausgleichskeil ausgebildet ist,

Fig.5    eine Seitenansicht einer weiteren Ausführungsform des Kindersitzes, bei dem der verstellbare Bodenabschnitt als Pendelboden mit einem
         Mittelgelenk ausgeführt ist,

Fig.6    eine Seitenansicht einer Ausführungsform eines
         Kindersitzes, bei der der verstellbare Bodenabschnitt als schwenkbarer Sitzboden mit einem
         am Ende des Rückenabschnittes angeordneten Gelenk,

Fig.7    eine Seitenansicht eines weiteren Ausführungsbeispieles eines Kindersitzes, bei dem der ver-
         stellbare Bodenabschnitt als schwenkbarer Fuß-
         abschnitt mit mittig angeordnetem Schwenkge-
         lenk ausgeführt ist,

Fig.8    eine schematische Seitenansicht eines Kindersitzes, der entgegen der Fahrtrichtung auf
         einem Fahrzeugsitz angeordnet ist und durch den
         Beckengurt des Dreipunkt-Fahrzeugsitzes gehalten ist,

Fig.9    eine schematische Seitenansicht eines Kindersitzes, die die Haltevorrichtung zur Aufnahme
des Beckengurtes deutlicher zeigt,

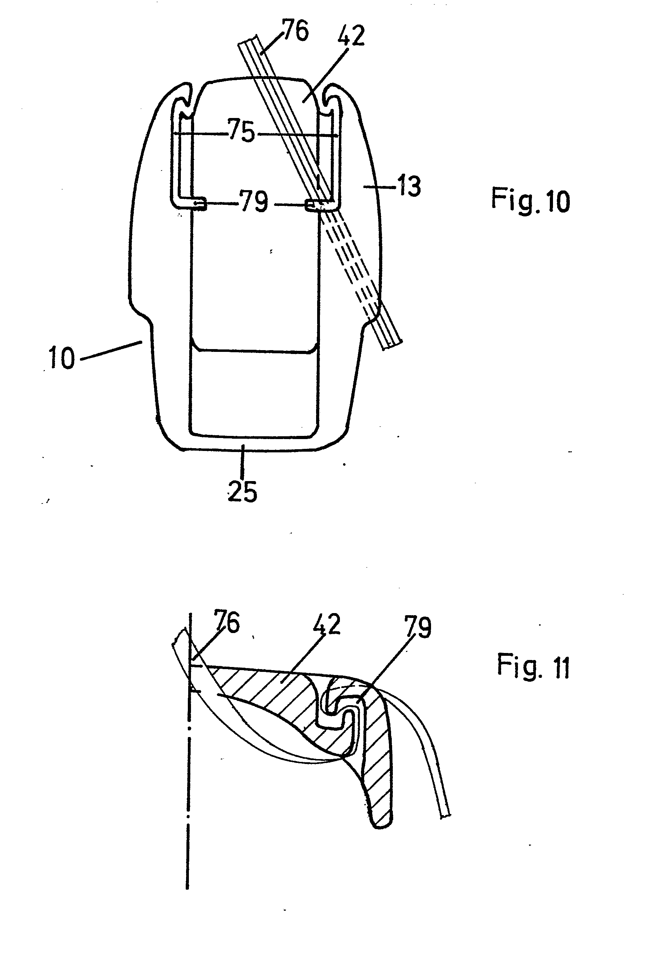

Fig.10    eine Draufsicht auf einen Kindersitz, in der die
Haltevorrichtung zur Aufnahme des Schultergurtes
eines Dreipunkt-Fahrzeuggurtes erkennbar ist,

Fig.11    ein waagerechter Schnitt durch eine Hälfte eines
Rückenabschnittes, in der die Haltevorrichtung
zur Aufnahme des Schultergurtes deutlicher dargestellt ist,

Fig.12    ein Schnitt durch den Kindersitz, in dem sich
ein Kind in sitzender Position befindet,

Fig.13    ein Polsterelement in ausgebauter, gestreckter
Lage,

Fig.14    der Kindersitz ohne das Polsterlement und ohne
den keilförmigen Sitzelementenabschnitt,

Fig.15    der in dem Fußbereich anzuordnende keilförmige
Sitzelementenabschnitt und

Fig.16    ein Schnitt durch den Kindersitz der Fig.12,
in dem das Polsterelement und der keilförmige
Sitzelementenabschnitt so angeordnet sind,
daß sich das Kind in dem Kindersitz in einer
liegenden Position befindet.

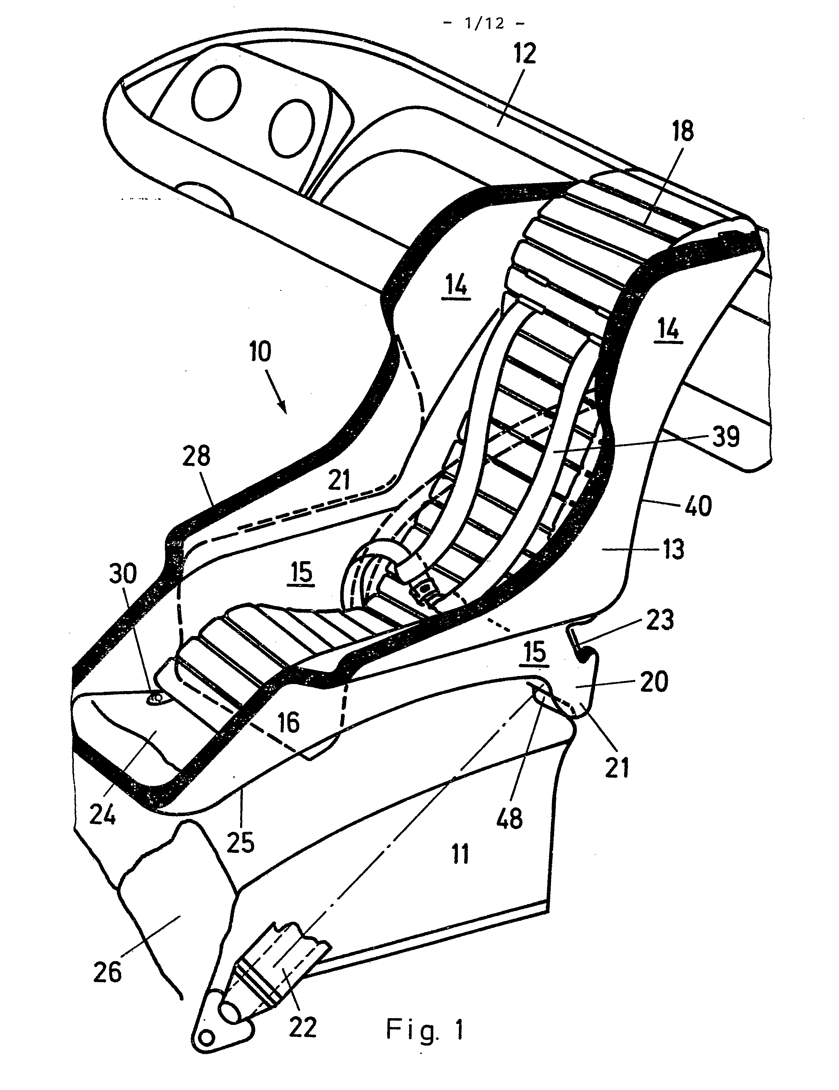

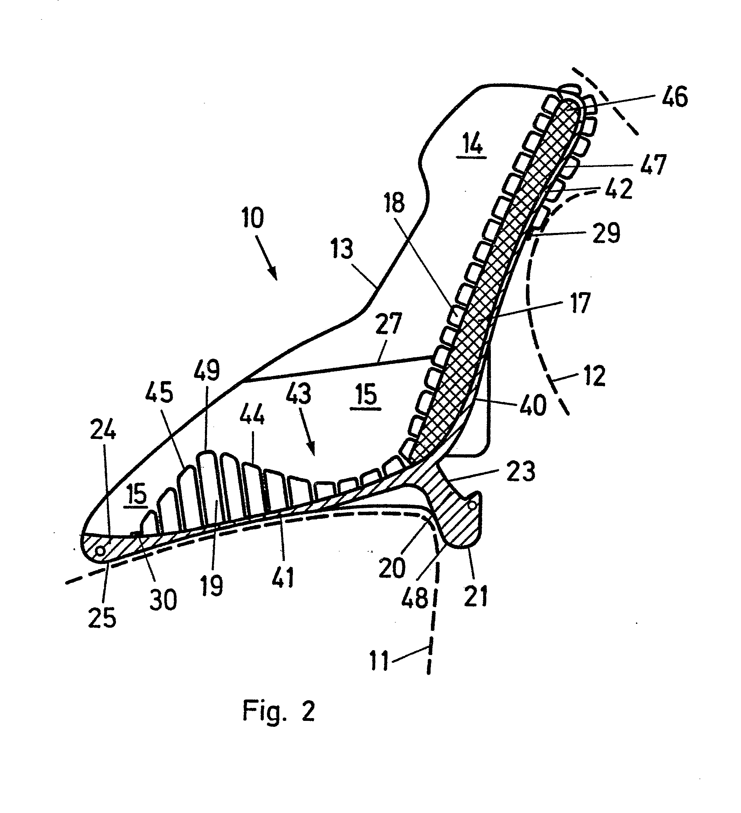

Der in Fig.1 perspektivisch dargestellte Kindersitz ist allgemein mit 10 bezeichnet. Dieser Kindersitz ist auf dem mit 11 bezeichneten Vordersitz eines Personenkraftfahrzeuges entgegen der Fahrrichtung aufgelegt. Die Rückseite des Kindersitzes legt sich gegen ein Armaturenbrett 12 des Fahrzeuges an. Der Kindersitz besteht aus einer einstückigen Sitzschale 40, die einen Sitzabschnitt 41, einen Rückenabschnitt 42 und einen Fußabschnitt 25 hat. Weiterhin besitzt die Sitzschale auf beiden Seiten Seitenabschnitte 13. Die Seitenabschnitte 13 bestehen aus einem Kopfbereich 14, einem Lendenbereich 15 und einem Fußbereich 16, die einstückig ausgebildet sind und ineinander übergehen. Der äußere Rand der Seitenabschnitte sowie der vordere Rand des Fußabschnittes 18 kann durch Polster zum Schutz des Kindes versehen sein. Gemäß Fig.2 ist in dem Rückenabschnitt 42 der Sitzschale ein energieabsorbierendes Element 17 angeordnet, das bei einem Frontalaufprall des Fahrzeuges bei entgegen der Fahrtrichtung aufgestelltem Kindersitz die von dem Kinderkörper ausgeübte Stoßenergie so absorbieren kann, daß die Belastung auf den Kinderkörper durch den Frontalaufprall in zulässigen Grenzen gehalten werden kann.

In der Sitzschale 40 des Kindersitzes ist ein durchgehendes Polsterelement 18 angeordnet, das im Bereich des Sitzabschnittes 41 einen ausgearbeiteten Sitzelementenabschnitt 19 besitzt. Dieser Sitzelementenabschnitt ist keilförmig ausgebildet. Hierdurch ergibt sich auf der einen Seite des keilförmigen Abschnittes zusammen mit dem Rückenbereich eine Vertiefung 43 zur Aufnahme des Beckenbereiches und des Gesäßbereiches des Kinderkörpers. Zum Fußabschnitt hin bietet die ansteigende Fläche 44 des Sitzelementenabschnittes 19 eine Auflage für die Oberschenkel. Die höchste Erhebung 49 des Sitzelementenabschnittes 19 bietet eine Unterstützung für die Kniekehlen. Die Unterschenkel des Kindes ruhen dann auf der abfallenden Fläche 45 des Sitzelementenabschnittes, so daß die Füße des Kindes auf der vor dem Sitzelementenabschnitt 19 angeordneten Fußauflage 24 des Fußabschnittes 25 ruhen. Das Polsterelement 18 ist in der Sitzschale 40 am unteren Ende durch Befestigungselemente 30 verstellbar angebracht. Das andere Ende des Polsterelementes erstreckt sich über die Oberkante 46 des Rückenabschnittes 42 auf die Rückseite 47 der Sitzschale 40, wo es durch obere Befestigungselemente 29 an der Sitzschale befestigt ist. In den Innenflächen der Seitenabschnitte 13 , und zwar in dem Lendenbereich, sind diese so ausgearbeitet, daß sich Armlehnenabschnitte 27 ergeben. Auf der Innenseite des Kindersitzes 10 sind Kindersitzgurte 39 angebracht, die in dem dargestellten Ausführungsbeispiel als Hosenträgergurte dargestellt sind. In einer anderen Ausführungsform können diese Gurte aber auch als Diagonalgurt, Beckengurt oder als Dreipunktgurt ausgebildet sein. Die Verankerungselemente zur Befestigung des Kindersitzgurtes sind in der Sitzschale versenkt befestigt. Eine derartige Ausführungsform ist an sich bekannt, wenn ein Formteil aus hochfestem Kunststoff in einer Form durch Spritzen hergestellt wird. Eine derartige Ausbildung der Sitzschale mit integrierten Befestigungselementen erleichtert die anschließende Montage der zugehörigen Teile wesentlich.

Wie aus den Ausführungsbeispielen der Fig.1 und 2 ersichtlich ist, sind die Seitenabschnitte 13 sowohl in dem Kopfbereich 14 als auch in den Seitenbereichen und dem Fußbereich weit vorgezogen, so daß die Seitenabschnitte in allen Bereichen das Profil eines in dem Kindersitz durch die Gurte gehaltenen Kindes ausreichend überdecken. Dadurch ist sichergestellt, daß bei einem Umfallen des Kindersitzes immer der Rand 28 zur Auflage kommt, wobei dann ein noch sicherer Spielraum bis zum Kinderkörper verbleibt. Der Fußabschnitt 25 ist auch so weit nach vorn verlängert, daß sich die Füße der Kinder aller Größen, für die der Kindersitz bestimmt ist, noch innerhalb des Sitzprofiles verbleiben. Die vorgezogenen Seitenteile geben aber auch dem Kindersitz bzw. der Sitzschale eine solche Biegefestigkeit, daß bei keiner Belastung durch den Kinderkörper bei einem Unfall die Sitzschale mehr als zulässig verbogen wird. Eine geringe, durch die Dimensionierung bestimmbare Verformung soll bei einem Unfall erfolgen, um so die Stoßbelastung auf den Kinderkörper weiter zu verringern. Der nach oben vorgezogene Kopfbereich des Seitenabschnittes 13 schützt den Kopf des Kindes auch davor, gegen die Innenseite der Windschutzscheibe zu stoßen, wenn der Kindersitz entgegen der Fahrtrichtung auf dem Vordersitz angeordnet ist. Dieser Schutz ist auch beim Hereintragen des Kindersitzes mit dem Kind in das Fahrzeug gegeben, so daß auch bei einem Anstoßen gegen einen Fahrzeugpfosten das Kind nicht gefährdet ist. Auf den waagerechten Bereich des Kopfbereiches 14 kann auch ein Sonnenschutz angebracht werden, um den Kopf des Kindes gegen das durch die Windschutzscheibe bei einer Aufstellung auf dem Vordersitz entgegen der Fahrtrichtung oder durch die Heckscheibe bei einem Aufstellen des Kindersitzes in Fahrtrichtung auf dem Rückensitz einfallende Sonnenlicht zu schützen.

Bei dem in Fig.1 und 2 dargestellten Ausführungsbeispiel des Kindersitzes ist an der unteren hinteren Kante der Sitzschale 40, an der der Sitzabschnitt 41 in den Rückenabschnitt übergeht, ein Halteabschnitt 20 vorgesehen. Der Halteabschnitt 20 ragt von dem unteren Sitzteil vor.

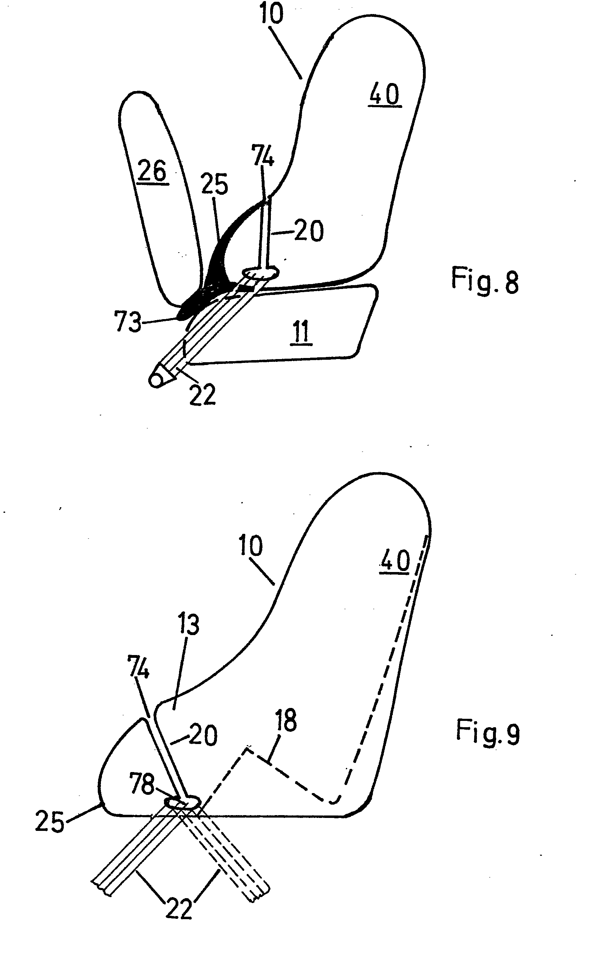

kann sich über die gesamte Breite des Kindersitzes
erstrecken oder er besteht aus zwei an den Seitenabschnitten 13 angeordneten Vorsprüngen. Diese Halteabschnitte haben sich nach unten erstreckende Vorsprünge
sowie nutenförmige Vertiefungen 23 auf der zu dem Rückenabschnitt 42 hinzeigenden Fläche. Diese Nut 23 dient dazu,
den Fahrzeug-Beckengurt 25 des Automatiksitzgurtes oder
eines Dreipunkt-Fahrzeuggurtes des Vordersitzes 11 aufzunehmen. Der untere Vorsprung 21 hat eine von der Nut 23
abgewandte Fläche 48, die sich gegen die Vorderkante des
Vordersitzes 11 anlegt, wenn der Kindersitz entgegen der
Fahrtrichtung auf dem Vordersitz aufgelegt ist. Da die
überwiegende Mehrheit der im Handel befindlichen Vordersitze der gängigen Automobiltypen in etwa die gleiche
Sitztiefe besitzt, liegt diese Fläche gegen die Vorderkante des Sitzes an,während sich das freie Ende des Fußabschnittes 25 gegen die Fläche der Rückenlehne 26 des
Vordersitzes anlegt oder der flach auslaufende Endabschnitt des Fußbereiches ist in den Spalt zwischen dem
unteren Ende der Rückenlehne und dem hinteren Ende der
Sitzfläche eingeschoben, um auf diese Weise den Kindersitz gegen ein Kippen zu sichern, wie dies später noch.
in Verbindung mit Fig.8 beschrieben ist.

In einer nicht dargestellten Ausführungsform ist der Sitzelementenabschnitt 19 von dem Polsterelement 18 getrennt
ausgebildet. Der Sitzelementenabschnitt 19 kann dann mit
der oberen Fläche des Sitzabschnittes 41 der Sitzschale
40 durch eine Keil-Nuten-Verbindung befestigt werden.
Dabei kann der Sitzelementenabschnitt 19 in verschiedenen
Stellungen in Längsrichtung des Sitzabschnittes angebracht
werden, um die Vertiefung 43 und das obere Ende 49 des
Sitzelementenabschnittes in eine der Körpergröße des
aufzunehmenden Kindes angepaßten Stellung zu befestigen.
Über den Sitzelementenabschnitt 19 legt sich dann das durchgehende Polsterelement 18, das an den beiden Enden mit den Befestigungsmitteln 29 und 30 an der Sitzschale befestigt ist. Durch diese individuell anpaßbare Stellung des Sitzelementenabschnittes kann eine quasi Liegeposition für das Kind oder den Säugling eingestellt werden in der der empfindliche Rückenbereich in der Nachbarschaft der energieabsorbierenden Elemente angeordnet ist.

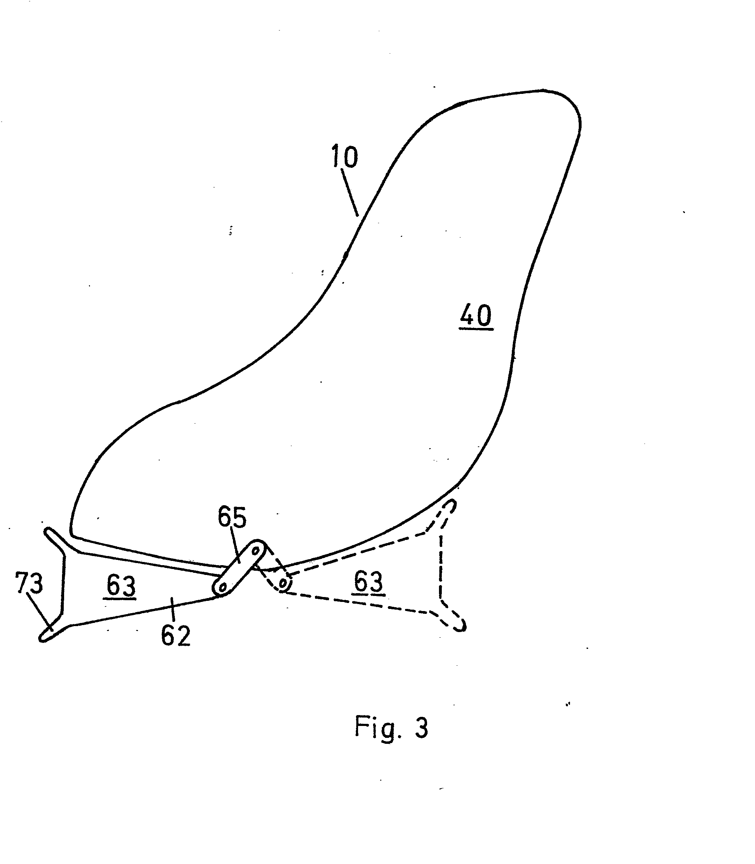

In den Fig.3 bis 7 sind verschiedene Ausführungsformen von verstellbaren Bodenabschnitten 62 dargestellt. Der in den Fig. 1 und 2 dargestellte Kindersitz ist nur für eine Aufstellung auf dem Fahrzeugsitz entgegen der Fahrtrichtung geeignet. Er besitzt einen nicht verstellbaren Bodenabschnitt. Für diese Aufstellung hat der in den Fig.1 und 2 gezeigte Kindersitz einen dafür geeigneten Winkel, unter dem der Bodenabschnitt der Sitzschale gegenüber dem Rückenabschnitt 42 verläuft. Wenn der Kindersitz mit einem solchen Winkel zwischen dem Bodenabschnitt und dem Rückenabschnitt in Fahrtrichtung auf dem Fahrzeugsitz angeordnet würde, so würde sich nur der vordere Fußabschnitt 25 auf den vorderen Teil der Sitzfläche und der obere Abschnitt des Rückenabschnittes gegen die Rückenlehne des Fahrzeugsitzes anlehnen und die übrigen Bereiche des Bodenabschnittes und des Rückenabschnittes hätten von den gegenüberliegenden Sitz- und Rückenflächenteilen einen Abstand. Dies würde eine unsichere und leicht kippende Stellung des Kindersitzes auf dem Fahrzeugsitz bedeuten. In dieser Position kann der Kindersitz auch nicht durch Gurte des Fahrzeuggurtes festgehalten werden. Der Kindersitz ist daher mit einem in Fig.1 nicht gezeigten verstellbaren Bodenabschnitt ausgebildet, durch den der Winkel des Bodenabschnittes zu dem Rückenabschnitt auf den erforderlichen Wert eingestellt werden kann, der einmal bei einer Aufstellung entgegen der Fahrtrichtung
und zum anderen bei einer Aufstellung in Fahrtrichtung
erforderlich ist.

Der verstellbare Bodenabschnitt ist in den Fig.3 bis 7
allgemein mit 62 bezeichnet. In Fig.3 ist der verstellbare Bodenabschnitt 62 als symmetrischer Ausgleichskeil
63 ausgebildet, der bei 65 mittig an dem Boden der Sitzschale 40 angelenkt ist. Zum Herstellen des gewünschten
Winkels des Bodens zu dem Rückenabschnitt wird der Ausgleichskeil 63 in die in Fig.3 mit ausgezogenen Strichen
gezeigte Lage für eine Anordnung entgegen der Fahrtrichtung und in die in Fig.3 in gestrichelten Linien gezeigte
Lage für eine Anordnung in Fahrtrichtung durch Herumschwenken des Keiles 63 gebracht. Der Ausgleichskeil 63
hat einen über die ganze Breite als Fläche spitz zulaufenden Vorsprung 73, der bei einer Anordnung des Kindersitzes
entgegen der Fahrtrichtung in den Spalt zwischen dem
unteren Ende der Rückenlehne und dem hinteren Ende des
Fahrzeugsitzes eingeklemmt werden kann, wie dies schematisch in Fig.8 dargestellt ist. Dieses Einklemmen des Vorsprunges 73 dient der Kippsicherheit. Der Vorsprung kann
auch beim Aufstellen des Kindersitzes 10 in Fahrtrichtung
auf einem Fahrzeugsitz in den gleichen Spalt zwischen
dem unteren Ende der Rückenlehne und dem hinteren Ende
der Sitzfläche eingeklemmt werden, um auch hier eine
größere Kippsicherheit zu erreichen.

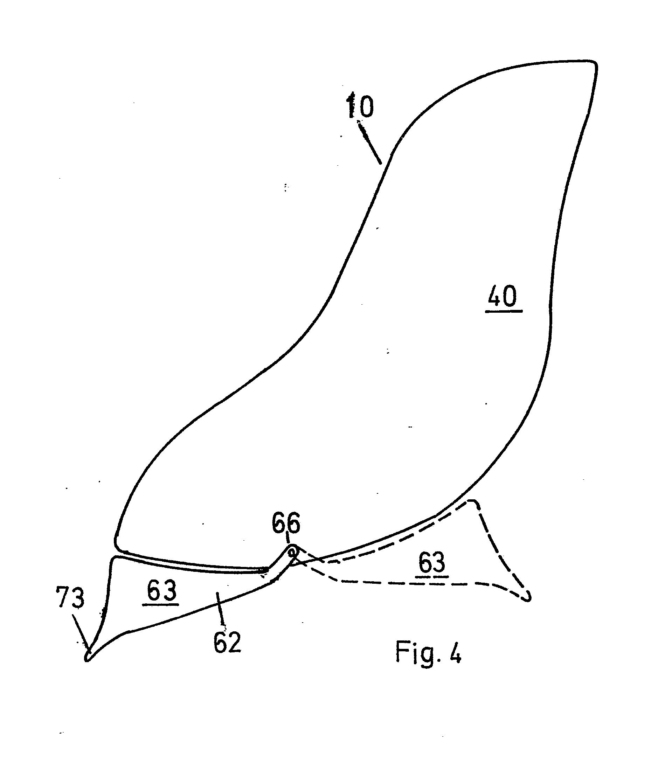

In Fig.4 ist ein nicht symmetrischer Ausgleichskeil 63
gezeigt. Dieser Keil ist nicht symmetrisch ausgeführt und
daher auch nicht gelenkig mit der Sitzschale 40 verbunden. Vielmehr wird ein Ende 66 des Ausgleichskeils
63 an dem Bodenteil der Sitzschale durch Einstecken in
eine entsprechende Aufnahme befestigt. In Fig.4 ist der Ausgleichskeil in ausgezogenen Linien für eine Aufstellung des Kindersitzes entgegen der Fahrtrichtung eingerichtet. Durch Herausnehmen und Herumdrehen und erneutes Einstecken des Ausgleichskeiles in der in Fig.4 in gestrichelten Linien gezeigten Stellung kann der Winkel des Bodenabschnittes zu dem Rückenbereich für eine Aufstellung in Fahrtrichtung angepaßt werden. Auch bei dieser Ausführungsform besitzt der Keil einen über die ganze Breite spitz zulaufenden Vorsprung 73, der in beiden Stellungen des Ausgleichskeils in den Spalt zwischen dem unteren Lehnenende und dem hinteren Sitzende eingeklemmt werden kann.

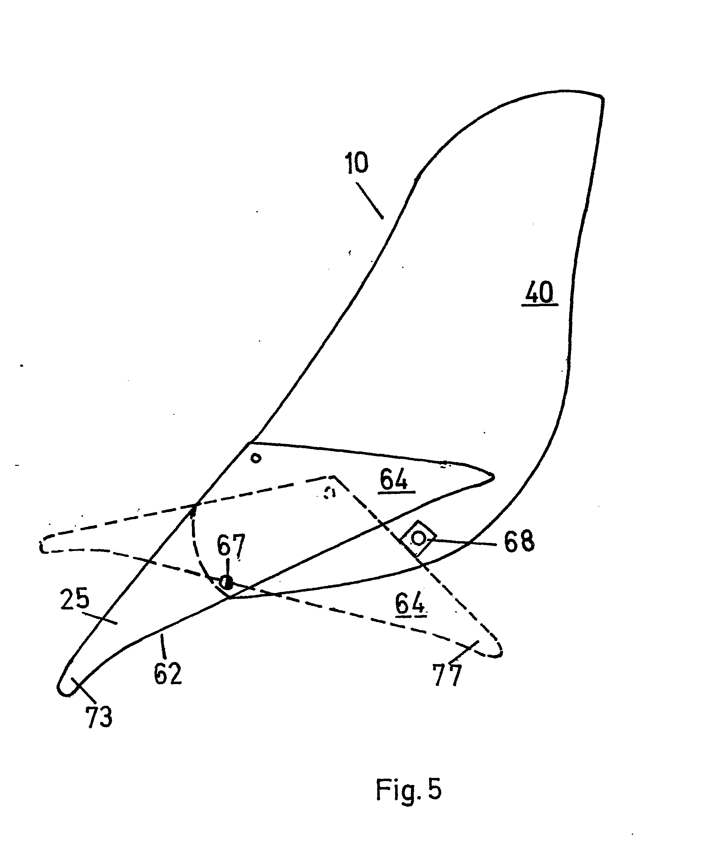

In Fig.5 ist der verstellbare Bodenabschnitt 62 als sogenannter Pendelboden 64 der Sitzschale 40 ausgebildet. Dieser Pendelboden ist bei 67 in seiner Mitte an der Sitzschale 40 angelenkt. Bei 68 ist ein verstellbarer Anschlag vorgesehen, der je nach der gewünschten Stellung des Pendelbodens eingestellt werden kann, damit der Kindersitz in seinem Bodenbereich zu dem Rückenbereich den entsprechend der gewünschten Aufstellung erforderlichen Winkel besitzt. Der Fußabschnitt 25 des Pendelbodens läuft nach vorn flach sich verjüngend zu und bildet dort einen spitz zulaufenden Vorsprung 73, der in der Aufstellung des Kindersitzes entgegen der Fahrtrichtung in den Spalt zwischen dem unteren Lehnenende und dem hinteren Sitzende des Fahrzeugsizes eingeklemmt werden kann. In der in Fig.5 mit ausgezogenen Linien gezeigten Stellung des Pendelbodens 64 ist der Kindersitz für eine Aufstellung entgegen der Fahrtrichtung auf einem Fahrzeugsitz geeignet. Nach Verlagern des verstellbaren Anschlages 68 kann der Pendelboden 64 in die in Fig.5 mit gestrichelten Linien dargestellte Stellung eingestellt werden, in der der Kindersitz geeignet ist, in Fahrtrichtung auf einem

Fahrzeugsitz aufgestellt zu werden. Das hintere Ende 77 des Pendelbodens kann dann analog zu dem vorderen Vorsprung 73 in den Spalt zwischen dem unteren Lehnenende und dem hinteren Sitzende eingesteckt werden, um dem Kindersitz so eine bessere Kippsicherheit zu verleihen.

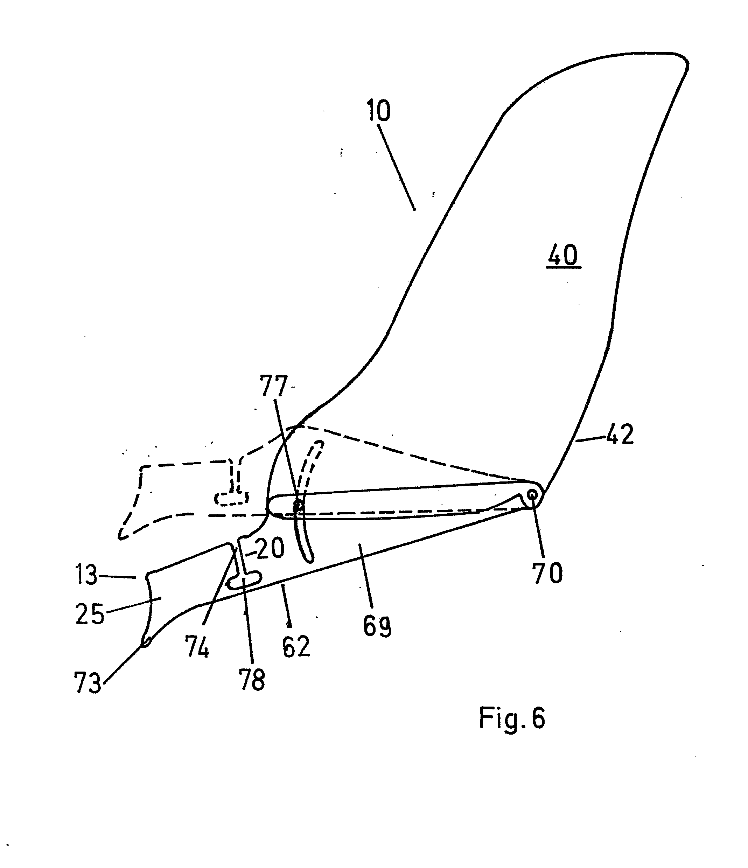

In Fig.6 ist der verstellbare Bodenabschnitt 62 als schwenkbarer Sitzboden 69 ausgebildet. Dieser Sitzboden 69 ist durch ein Gelenk 70 am unteren Ende des Rückenabschnittes 42 der Sitzschale angelenkt. Durch eine in einem im Bogen geführten Längsschlitz angeordnete Befestigungsschraube 77 kann der Sitzboden 69 in der gewünschten Stellung fest mit der Sitzschale 40 des Kindersitzes 10 verbunden werden. In der in Fig.6 mit ausgezogenen Linie gezeigten Einstellung des Sitzbodens ist der Kindersitz geeignet, entgegen der Fahrtrichtung auf einem Fahrzeugsitz angeordnet zu werden. In dieser Stellung ist der am Fußabschnitt 25 angeordnete, flach nach vorn sich verjüngende Vorsprung wieder in den Spalt zwischen dem unteren Lehnenende und dem hinteren Sitzende eingeklemmt, um den Kindersitz fest gegen ein Kippen zu sichern. In der in Fig.6 gestrichelt dargestellten Stellung des Sitzbodens bildet dessen untere Fläche mit der Fläche des Rückenabschnittes 42 einen Winkel, der für eine Aufstellung des Kindersitzes in Fahrtrichtung auf einem Fahrzeugsitz geeignet ist. In Fig.6 ist auch die Haltevorrichtung 20 erkennbar. Diese Haltevorrichtung besteht aus einem parallel zu dem Sitzboden verlaufenden Schlitz 78 sowie einem dazu rechtwinklig sich erstreckenden Schlitz 74. Beide Schlitze erstrecken sich durch die unteren Seitenteile 13 der Sitzschale, wobei die Seitenteile hier Seitenabschnitte des schwenkbaren Sitzbodens 69 sind. Der waagerechte Schlitz 78 ist in dem Seitenabschnitt 13 so hoch über dem quer verlaufenden Boden angeordnet, daß der in diesem Schlitz 78 angeordnete
Beckengurtteil auf der inneren Bodenfläche des schwenkbaren Sitzbodens 69 aufliegt. Wie dies in Fig.9 gezeigt
ist, sind bei einer Anordnung des Beckengurtes 22 in
dem Schlitz 78 beide Zugrichtungen möglich. In der Fig.9
ist der Beckengurt 22 in ausgezogenen Linien für eine
Aufstellung des Kindersitzes 10 entgegen der Fahrtrichtung gezeigt. Für eine Aufstellung des Kindersitzes 10
in Fahrtrichtung hat der Beckengurt 22 die in Fig.9 gestrichelt dargestellte Stellung.

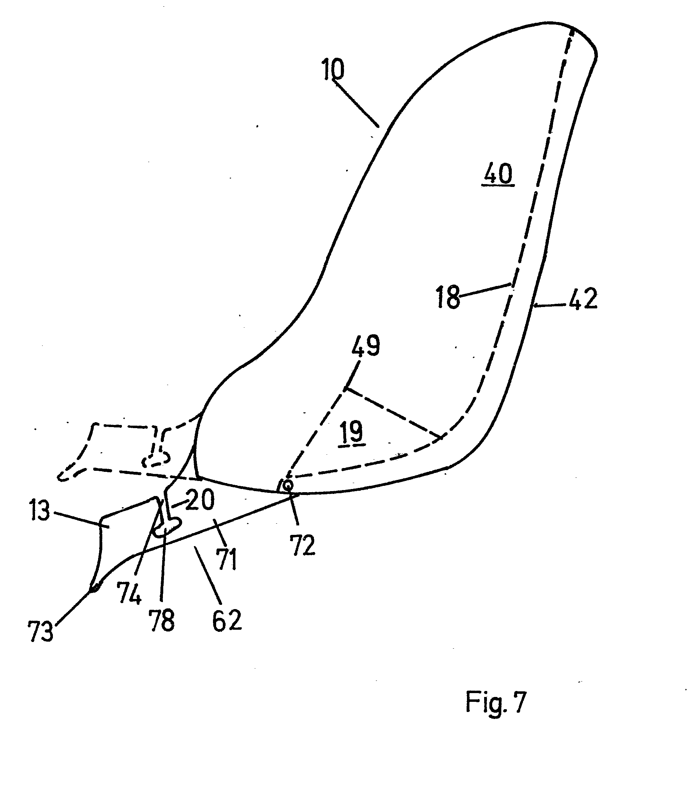

In Fig.7 ist eine andere Ausführungsform des verstellbaren Bodenabschnittes 62 gezeigt. Hier besteht der Bodenabschnitt 62 aus einem schwenkbaren Fußabschnitt 71.
Dieser Fußabschnitt 71 ist bei 72 in der Mitte des Bodenbereiches der Sitzschale 40 schwenkbar angelenkt. In
der in Fig.7 mit ausgezogenen Linien gezeigten Stellung
bildet die gesamte Bodenfläche des Kindersitzes zu dem
Rückenabschnitt 42 einen Winkel, der eine Aufstellung
auf einem Fahrzeugsitz entgegen der Fahrtrichtung ermöglicht. Durch ein Schwenken des Fußabschnittes 71 nach
oben in die in Fig.7 mit gestrichelten Linien gezeigte
Stellung ergibt sich zwischen dem Rückenabschnitt 42 und
der unteren Fläche des schwenkbaren Fußabschnittes 71
ein Winkel, der eine Aufstellung des Kindersitzes in der
Fahrtrichtung auf einem Fahrzeugsitz erlaubt. Dabei
bleibt allerdings das hintere untere Ende des Kindersitzes ohne Auflage auf dem Fahrzeugsitz. Der schwenkbare Fußabschnitt 71 kann an der Sitzschale durch eine
nicht gezeigte Befestigungsvorrichtung in der gewählten
Stellung befestigt werden. In den Seitenabschnitten 13
des schwenkbaren Fußabschnittes sind die oben beschriebenen Schlitze 74 und 78 zur Aufnahme des Beckengurtes eines Dreipunkt-Fahrzeugsitzgurtes vorgesehen, um den
Kindersitz durch den Beckengurt in der gewählten Aufstellung zu halten  Auch der schwenkbare Fußabschnitt
71 der Ausführungsform der Fig.7 hat einen sich flach
nach vorn verjüngenden Vorsprung 73, der für die in
ausgezogenen Linien gezeigte Stellung des Fußabschnittes
ein Einklemmen in den Spalt zwischen dem unteren Lehnenende und dem hinteren Sitzende gestattet. In Fig.7 ist
noch gestrichelt angedeutet die Anordnung des Polsterelementes 18 in dem Kindersitz mit der Erhebung 49 eines
einstellbaren Sitzelementenabschnittes 19.

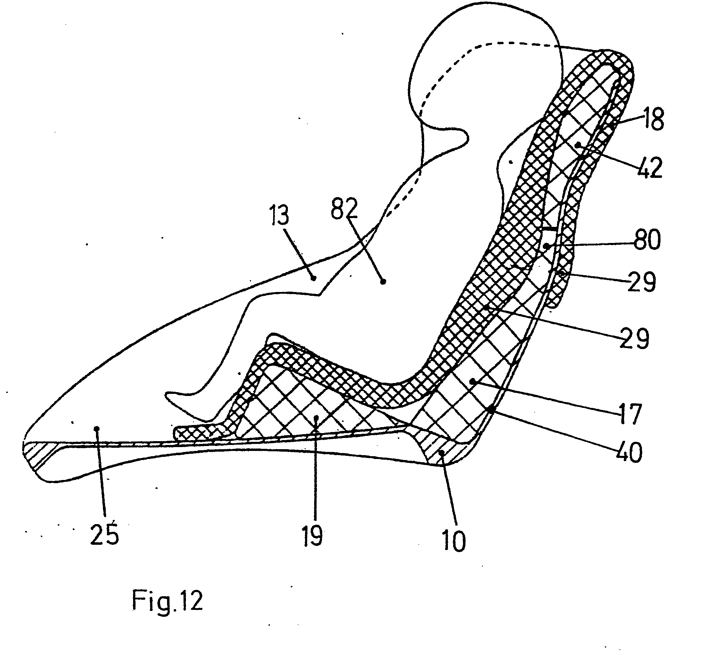

Die Haltevorrichtung 20 zur Anordnung des Beckengurtes
22 in dem unteren Seitenabschnitt 13 in Verbindung mit dem
den Seitenabschnitt 13 durchdringenden Schlitz 74 und dem
waagerechten Schlitz 78 ist in Verbindung mit Fig.9 bereits
beschrieben worden. Der obere Rückenabschnitt 42 des Kindersitzes wird bei einer Aufstellung in Fahrtrichtung
durch den Schultergurt 76 des Dreipunkt-Fahrzeugsitzgurtes gehalten. Hierzu sind die oberen Seitenabschnitte
13 des Kindersitzes von Schlitzen 75 durchdrungen, die
in waagerechten Schlitzen 79 enden. Der Schultergurt 76
legt sich dann gegen die Rückenfläche des Kindersitzes
an. Da es sich um einen flachen schmalen Gurt handelt,
wird er den Sitzkomfort des Kindes im Rückenbereich
nicht stören. Die Ausbilung des waagerechten Schlitzes
79 ist in dem Querschnitt der Fig.11 erkennbar. Der Schlitz
79 ist S-förmig ausgebildet, damit bei einer Zugbelastung
in dem Schultergurt 76 eine erhöhte Reibung erzeugt wird,
damit der Kindersitz im oberen Bereich bei einer Aufstellung in Fahrtrichtung sicher gehalten werden kann.

In Fig.12 ist ein Längsschnitt durch einen Kindersitz dargestellt, wobei die Einzelteile des Kindersitzes so angeordnet sind, daß sich ein Kind in sitzender Position befindet, wie die Kontur 82 des sitzenden Kindes andeutet. Der allgemein mit 10 bezeichnete Kindersitz besteht aus einer starren, biegesteifen Sitzschale 40, deren Festigkeit durch die seitlich hochgezogenen Seitenteile 13 verstärkt ist, wie dies in Verbindung mit den vorher beschreibenen Ausführungsbeispielen beschrieben ist. In der Sitzschale 40 ist in der Rückenlehne 42 ein energieabsorbierendes Material angeordnet. Wie aus der Fig.12 ersichtlich ist, erstreckt sich das energieabsorbierende Material über die gesamte Länge der Rückenlehne. Das energieabsorbierende Material hat in dem Beckenbereich 17 eine größere Wandstärke als in dem Mittelbereich, in dem durch eine Verringerung der Wandstärke des energieabsorbierenden Materials eine deutlich erkennbare Vertiefung 80 ausgebildet ist. In dem daran sich nach oben anschließenden Bereich der Rückenlehne 42 hat das energieabsorbierende Material wieder eine größere Wandstärke. In dem Fußabschnitt 25 befindet sich ein Einsatz 19, der als keilförmiger Sitzelementenabschnitt ausgebildet ist und der sich über die gesamte Breite des Kindersitzes erstreckt. Dieser keilförmige Sitzelementenabschnitt 19 ist durch Rastnasen oder ähnliche Befestigungsvorrichtungen fest in dem Fußabschnitt 25 der Sitzschale eingesetzt und gehalten. Es sei bemerkt, daß jedoch dieser keilförmige Sitzelementenabschnitt in der Länge des Fußabschnittes 25 der Sitzschale sowohl in der gezeigten Stellung als auch in einer um 180° gewendeten Stellung auf der gleichen Aufstellfläche weiter vorn in dem Fußabschnitt in anderen Rastvorrichtungen befestigt werden kann. Über das energieabsorbierende Material in der

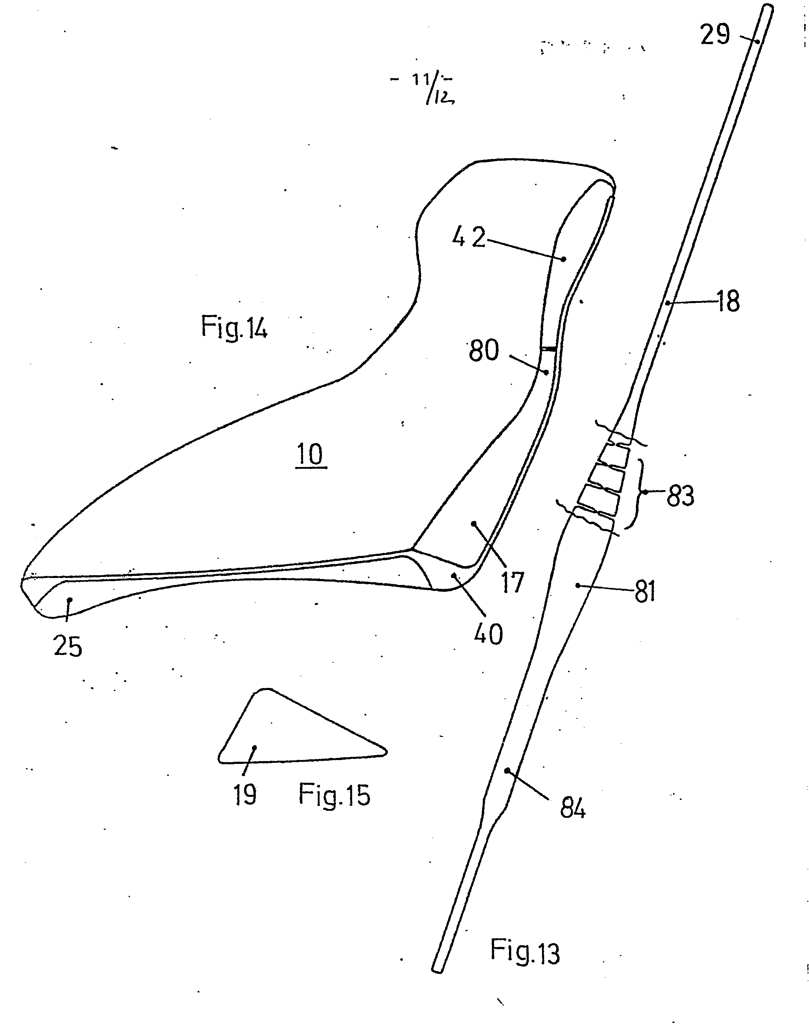

Rückenlehne 42 und dem keilförmigen Sitzelementenabschnitt ist ein einstückiges Polsterelement 18 gelegt. Dieses Polsterelement erstreckt sich über das obere Ende der Rückenlehne hinaus und es ist auf der Rückseite der Rückenlehne bei 29 befestigt. Das andere Ende des Polsterelementes 18 ist in dem Fußabschnitt 25 so befestigt, daß der keilförmige Sitzelementenabschnitt 19 völlig überdeckt ist. Dieses Polsterelement 18 ist mit einer deutlichen Verdickung 81 ausgebildet. Bei einer Anordnung des Polsterelementes 18 in einer Position, in der das Kind eine sitzende Stellung einnehmen soll, ist das Polsterende 29 so befestigt, daß die Verdickung 81 des Polsterelementes vollständig in der Vertiefung 80 in dem Rückenlehnenbereich angeordnet ist und die Vertiefung vollständig ausfüllt. Hierdurch ergibt sich eine glatte Oberfläche in dem Rückenlehnenbereich für das sitzende Kind. Die Einzelteile der Fig.13 bis 15 für das Polsterelemt 18, die Sitzschale 40 des Kindersitzes 10 und den keilförmigen Polsterelmentenabschnitt 19 unterstreichen die vorgenannten Darlegungen. Das Polsterlement 18 kann oberhalb der Verdickung 81, das heißt zu dem Polsterelementenende 29 hin versetzt mit quersegmentierten Polsterabschnitten versehen sein. Jedoch muß sichergestellt sein, daß das Polsterelement in sich einen ausreichenden Zusammenhang hat und durch diese Quersegmentierung bei einer Längsverstellung nicht zerstört werden kann. Als Material für das Polsterelement hat sich Weichschaum als besonders geeignet gezeigt. An den Enden des Polsterelements sind zur Befestigung an der Sitzschale Druckknöpfe oder dergleichen Befestigungsmittel angebracht.

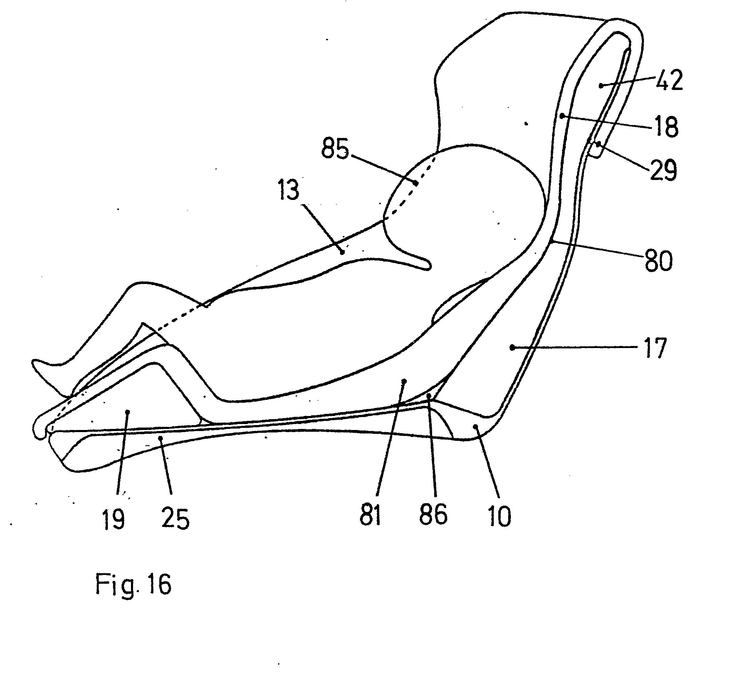

In Fig.16 sind nur die losen Teile des Kindersitzes so verstellt angeordnet und befestigt, daß sich für das in dem Kindersitz befindliche Kind eine bequeme Ligeposition ergibt, wie dies durch die Kontur 85 des liegenden Kindes
angedeutet ist. Der keilförmige Sitzelementenabschnitt 19
ist in dem Fußabschnitt 25 herumgedreht weiter vorn in dem
Fußabschnitt befestigt. Das Polsterelment 18 ist nach Lösen des Endes 29 in seiner Länge so weit zum Fußabschnitt
25 hin verlagert worden, daß sich die Verdickung 81 des
Polsterelementes 18 an der Verbindungsstelle 86 zwischen
der Rückenlehne 42 und dem Sitzabschnitt am inneren Ende
des Fußabschnittes befindet. An dieser Stelle füllt die
Verdickung 81 des Polsterelementes 18 die in dem Verbindungsbereich 86 vorhandene Vertiefung aus. Gleichzeitig
wird die Vertiefung 80 in dem energieabsorbierenden Material im Mittelbereich der Rückenlehne wirksam, um dem
Kopf des Kindes eine weiter nach hinten geneigte Position
zu ermöglichen, da die Wandstärke des Polsterabschnittes,
der sich jetzt über der Vertiefung befindet, wesentlich geringer  ist als die vorher an dieser Stelle angeordnete
Verdickung 81. Eingeschlossen von den Seitenteilen 13 der
Sitzschale 40 ist an der Kontur 85 des liegenden Kindes zu
erkennen, daß der Körper des Kindes eine relativ gestreckte
Lage einnehmen kann. Gleichzeitig ist durch die verlagerte
Anordnung des keilförmigen Sitzelementenabschnittes 19
der Gesäßbereich des Kindes abgestützt, so daß das Kind
bei angelegtem Sicherheitsgurt bei einem Aufprall des Fahrzeuges sicher gehalten wird. Auch in dieser Lage wird das
energieabsorbierende Material in dem unteren Bereich der
Rückenlehne 42 wirksam, da sich in diesem Bereich nun
die Schulter des Kindes befindet. Besonders vorteilhaft
wird das Kind bei einem Frontalaufprall dann geschützt,
wenn sich der Kindersitz entgegen der Fahrtrichtung auf
dem Vordersitz oder Hintersitz des Fahrzeuges befindet,
da in dieser Stellung das energieabsorbierende Material
im unteren Bereich der Rückenlehne voll wirksam werden
kann und noch durch die Verdickung 81 im Polsterlement
unterstützt wird.

DIPL.-ING. LOTHAR WERNER

PATENTANWALT

BOLIVARALLEE 9
D-1000 BERLIN 19
TEL.(030)304 60 83

- 26 -

Dr.-Ing.Heinz-Dieter Adomeit

Grolmanstraße 16

1000 Berlin 12


Mein Zeichen: A 132


P a t e n t a n s p r ü c h e


1. Kindersitz für Personenkraftfahrzeuge mit einer Sitzfläche, einer Rückenstütze, einer Haltevorrichtung
zum Anschluß an den normalen Fahrzeug-Automatiksitzgurt und mit gesonderten, dem Sitz zugeordneten Rückhaltegurten,gekennzeichnet durch eine biegesteife Sitzschale (40) mit vorgezogenen Seitenabschnitten (13) im
Kopf- (14), Lenden- (15) und Fußbereich (16), durch
einen sich verjüngenden Fußabschnitt (25), durch Stoßenergie absorbierende Elemente (17) auf der Innenseite der Sitzschale (40) im Kopf-, Rücken- und Beckenbereich, durch ein in Längsrichtung einstellbares Polsterelement (18) mit ausgearbeiteten Sitzelementenabschnitten (19), durch einen verstellbaren Bodenabschnitt (62) zur Anpassung an die Neigung des Fahrzeugsitzes, auf dem der Kindersitz (10) wahlweise in die
oder entgegen der Fahrtrichtung aufstellbar ist, und durch
eine Haltevorrichtung (20) zur Aufnahme des Gurtbandes des Fahrzeugsicherheitsgurtes (22) zur Halterung
des Kindersitzes auf dem Fahrzeugsitz.


2. Kindersitz nach Anspruch 1, dadurch gekennzeichnet,
daß der verstellbare Bodenabschnitt (62) als verstellbarer Keil (63) ausgebildet ist.


We/na

3. Kindersitz nach Anspruch 1, dadurch gekennzeichnet, daß der verstellbare Bodenabschnitt (62) als mittig angelenktes Pendel (64) ausgebildet ist.

4. Kindersitz nach Anspruch 1, dadurch gekennzeichnet, daß der verstellbare Bodenabschnitt (62) als schwenkbar angelenkter Sitzboden der Sitzschale (40) ausgebildet ist, dessen Gelenkpunkt (70) am Übergang in den Rückenabschnitt (42) angeordnet ist.

5. Kindersitz nach Anspruch 1, dadurch gekennzeichnet, daß der verstellbare Bodenabschnitt (62) als schwenkbarer Fußabschnitt (71) ausgebildet ist, der in der Mitte des Schalenbodens angelenkt ist.

6. Kindersitz nach einem der vorhergehenden Ansprüche, dadurch gekennzeichnet, daß das vordere Ende des Fußabschnittes (25) als flach sich verjüngender Vorsprung (73) ausgebildet ist, der bei einer Anordnung des Kindersitzes entgegen der Fahrtrichtung zur Kippsicherung zwischen dem unteren Lehnenende und dem hinteren Sitzende des Fahrzeugsitzes einklemmbar ist.

7. Kindersitz nach einem der vorhergehenden Ansprüche, dadurch gekennzeichnet, daß die Haltevorrichtung (20) zur Aufnahme des Gurtbandes (22) des Fahrzeuggurtes als die unteren Seitenteile (13) der Sitzschale (40) durchdringende Schlitze (74,78) ausgebildet ist, die eine Anordnung des Beckengurtes (22) des Dreipunkt-Fahrzeuggurtes auf dem Fußabschnitt (25) des Kindersitzes ermöglichen.

8. Kindersitz anch einem der vorhergehenden Ansprüche, dadurch gekennzeichnet, daß die Haltevorrichtung (20) zur Aufnahme des Gurtbandes des Fahrzeuggurtes als die oberen Seitenteile (13) durchdringende Schlitze (75, 79) ausgebildet ist, die eine Anordnung des Schultergurtes (76) eines Dreipunkt-Fahrzeuggurtes in dem Rückenabschnitt (42) des Kindersitzes (10) ermöglichen.

9. Kindersitz nach Anspruch 8, dadurch gekennzeichnet, daß die waagerechten Schlitze (79) in den oberen Seitenteilen (13) zur Erhöhung eines Reibungseingriffes mit dem Schultergurt (76) bei einer Zugbelastung S-förmig ausgebildet sind.

10. Kindersitz nach einem der vorhergehenden Ansprüche, dadurch gekennzeichnet, daß die vorgezogenen Seitenabschnitte (13) oberhalb des Lendenbereiches (15) auf der Innenseite als Armlehnen (27) ausgebildet sind.

11. Kindersitz nach einem der vorhergehenden Ansprüche, dadurch gekennzeichnet, daß das Polsterelement (18) mit seinen ausgearbeiteten Sitzelementenabschnitten (19) an einem Ende im Fußabschnitt (25) und an dem anderen Ende im Kopfbereich (14) auf der Rückseite der Sitzschale (40) durch Befestigungselemente (29,30) einstellbar gehalten sind.

12. Kindersitz nach Anspruch 11, dadurch gekennzeichnet, daß der Sitzelementenabschnitt (19) unabhängig von dem Polsterelement (18) in der Sitzschale (40) in Längsrichtung verstellbar befestigt ist.

13. Kindersitz nach Anspruch 12, gekennzeichnet durch
eine Nut-Keilverbindung auf der Unterseite des Sitzelementenabschnittes (19) und der zugeordneten Oberseite (41) der Sitzschale (40).

14. Kindersitz nach einem der vorhergehenden Ansprüche,
dadurch gekennzeichnet, daß die Sitzschale (40) aus
einer einstückig ausgebildeten Außenschale (60) aus
hochfestem Kunststoff besteht, in der eine einstückige
Einlageschale aus Styropor befestigt ist.

15. Kindersitz nach einem der vorhergehenden Ansprüche,
dadurch gekennzeichnet, daß alle Verankerungselemente
zur Befestigung von Gurtelementen in der Sitzschale
eingelassen befestigt sind.

16. Kindersitz nach einem der vorhergehenden Ansprüche,
dadurch gekennzeichnet, daß die Rückenlehne (42) im
Mittelbereich eine Vertiefung (80) hat, daß das lose
und längsverstellbare Polsterelement (18) in der Sitzposition im Bereich der Vertiefung (80) eine zum Ausgleich der Viertiefung dienende Verdickung (81) besitzt und daß der Sitzschalenabschnitt, der in der
Sitzposition zur Unterstützung der Oberschenkel und
des Gesäß-Beckenberichs dient, als verstellbarer,
keilförmiger Sitzelementenabschnitt (19) ausgebildet
ist.

17. Kindersitz nach Anspruch 16, dadurch gekennzeichnet,
daß der keilförmige Sitzelementenabschnitt (19) in
Rastpositionen verstellbar ist.

18. Kindersitz nach Anspruch 16 oder 17, dadurch gekennzeichnet, daß das Polsterelement (18) der Verdickung

(81) nach oben benachbart quersegmentierte Polsterabschnitte (83) hat.

19. Kindersitz nach einem der vorhergehenden Ansprüche,
    dadurch gekennzeichnet, daß das Polsterelement (18)
    aus Weichschaumstoff besteht.

20. Kindersitz nach einem der vorhergehenden Ansprüche,
    dadurch gekennzeichnet, daß die biegesteife Sitzschale
    (40) mit energieabsorbierendem Material ausgefüllt
    ist, in dem die Vertiefung (80) im Mittelbereich der
    Rückenlehne (42) ausgebildet ist, und daß der verstellbare, keilförmige Sitzelementenabschnitt (19) im
    Fußabschnitt (25) aus energieabsorbierendem Material
    besteht.

0049680

- 1/12 -

Fig. 1

Fig. 2

Fig. 3

Fig. 4

- 5/12 -

10

40

64

67

68

25

64

62

77

73

Fig. 5

Fig.6

0049680

- 7/12

Fig. 7

10

40

26    25    74

20

73

22    11

Fig. 8

10

40

13

74

20    18

78

25

22

Fig. 9

0049680

$-\frac{9}{12}-$

Fig. 10

Fig. 11

Fig.12

0049680

29

11/12

42

18

Fig.14

80

10

83

17

81

40

25

84

19  Fig.15

Fig.13

0049680

- 12/12 -

Fig. 16

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 186 961 (FARRELL) | |
| | * Spalte 3, Zeilen 52-66; Spalte 4, Zeile 3 bis Spalte 5, Zeile 46; Spalte 6, Zeilen 20-32; Figuren 1-3,7-10,15-20 * | 1,10, 11,14 |
| | --- | |
| | US - A - 4 186 962 (MEEKER) | |
| | * Spalte 2, Zeilen 4-66; Figuren * | 1,10, 14 |
| | --- | |
| | FR - A - 2 288 646 (ANGEVINIERE) | |
| | * Seite 4, Zeilen 29-34; Seite 5, Zeilen 4-6; Patentanspruch 1; Figur 1 * | 1,14, 19,20 |

**KLASSIFIKATION DER ANMELDUNG (Int. Cl.³)**

B 60 N 1/12
A 47 D 1/00

**RECHERCHIERTE SACHGEBIETE (Int. Cl.³)**

B 60 N
A 47 D

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06.01.1982 | VANDEVONDELE |

EPA form 1503.1 06.78